# EUROPÄISCHE PATENTANMELDUNG

(11) **EP 2 592 324 A2**
(43) Veröffentlichungstag der Anmeldung: **15.05.2013**
(21) Anmeldenummer: 12191967.4
(22) Anmeldetag: 09.11.2012
(51) Int. Cl.: F16N 25/02

(54) **Progressivverteilergrundkörper und Verfahren zum Einbringen von Schmierstoff**

(30) Priorität: 11.11.2011 DE 102011086179
(71) Anmelder: Lincoln GmbH, 69190 Walldorf (DE)
(72) Erfinder: Schmitt, Rainer, 76863 Herxheim (DE)
(74) Vertreter: Schonecke, Mitja

(57) **Zusammenfassung**

Die Erfindung geht aus von einem Progressivverteilergrundkörper mit einem ersten Schmierstoffeinlasskanal (12).

Es wird vorgeschlagen, dass der Progressivverteilergrundkörper wenigstens einen zweiten Schmierstoffeinlasskanal (14) aufweist.

## Beschreibung

Die Erfindung geht aus von einem Progressivverteilergrundkörper nach dem Oberbegriff des Anspruchs 1.

Progressivverteilergrundkörper sind beispielsweise aus den Schriften US 3 921 760 A, DE 20 2009 002 951 U und DE 196 07 783 A1 bekannt.

Die Aufgabe der Erfindung besteht insbesondere darin, einen gattungsgemäßen Progressivverteilergrundkörper bereitzustellen, welcher effizient herstellbar und betreibbar ist. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Progressivverteilergrundkörper mit einem ersten und wenigstens einem zweiten Schmierstoffeinlasskanal.

Es wird also vorgeschlagen, der Progressivverteilergrundkörper wenigstens einen zweiten Schmierstoffeinlasskanal aufweist. Unter einem "Progressivverteiler" soll insbesondere ein Verteiler verstanden werden, welcher dazu vorgesehen ist, verschiedenen Schmierstellen zeitlich nacheinander festgelegte oder einstellbare Schmierstoffmengen zuzuführen, wobei diejenige Energie, welche der Verteiler für das Zuführen verwendet, ausschließlich von einer kinetischen Energie stammt, welche Schmierstoff bei Eintritt in den Progressivverteiler hat. Unter einem "Progressivverteilergrundkörper" soll insbesondere der Grundkörper eines Progressivverteilers verstanden werden. Unter "vorgesehen" soll insbesondere speziell ausgelegt und/oder ausgestattet verstanden werden. Unter einem "Schmierstoffeinlasskanal" soll insbesondere ein Element zur Einleitung und Weiterleitung von Schmierstoff verstanden werden, welches durch eine Ausnehmung des Progressivverteilergrundkörpers gebildet ist und welches sich von einem Rohr und einem Teil einer T-förmigen Verbindung von Rohren unterscheidet. Mit einer erfindungsgemäßen Ausgestaltung kann ein Progressivverteilergrundkörper bereitgestellt werden, welcher effizient herstellbar und betreibbar ist. Insbesondere kann erreicht werden, dass zwei Schmierstoffeinlasskanäle kostengünstig hergestellt werden können und der Progressivverteilergrundkörper eine kompakte Bauweise aufweist. Insbesondere kann bei einem auftretenden Defekt eine einfache Fehlersuche erfolgen. Insbesondere kann bei einer Schmieranlage mit Progressivverteilern, welche erfindungsgemäß ausgebildete Progressivverteilergrundkörper aufweisen, erreicht werden, dass bei einem auftretenden Defekt zur Fehlersuche einzelne Progressivverteiler nicht abgeklemmt werden müssen sondern bei jedem einzelnen Progressivverteiler mittels einer manuellen Pumpe Schmierstoff durch den zweiten Schmierstoffeinlasskanal einleitbar ist.

Ferner wird vorgeschlagen, dass der erste Schmierstoffeinlasskanal mit dem zweiten Schmierstoffeinlasskanal zusammentrifft. Dadurch können die beiden Kanäle alternativ verwendet werden.

Der Progressivverteilergrundkörper ist einstückig ausgebildet. Unter "einstückig" soll insbesondere aus einem Guss und/oder aus einer Spritzung und/oder nur unter Zerstörung trennbar verstanden werden. Dadurch kann eine stabile Bauweise erreicht werden.

Eine Längsrichtung des zweiten Schmierstoffeinlasskanals ist parallel zu einer Längsrichtung einer Bohrung des Progressivverteilergrundkörpers, welche wenigstens einen der Schmierstoffeinlasskanäle mit einem Kanal des Progressivverteilergrundkörpers verbindet, der zu wenigstens zwei Ausnehmungen des Progressivverteilergrundkörpers, welche für die Aufnahme von Kolbenelementen vorgesehen sind, führt. Hierdurch kann eine einfache und kostengünstige Herstellbarkeit erreicht werden.

Ferner wird ein Progressivverteiler mit dem Progressivverteilergrundkörper vorgeschlagen, wodurch eine effizientes Herstellen und Betreiben des Progressivverteilers erreicht werden kann.

Vorzugsweise weist der Progressivverteiler wenigstens einen Schmiernippel auf, durch welchen in wenigstens einem Betriebsmodus des Progressivverteilers Schmierstoff in den zweiten Schmierstoffeinlasskanal einbringbar ist. Hierdurch kann eine einfache und kostengünstige Betriebsweise und insbesondere eine einfache Suche nach Defekten erreicht werden.

Außerdem wird vorgeschlagen, dass der Schmiernippel an einem Ende des zweiten Schmierstoffeinlasskanals angeordnet ist. Dadurch kann eine kompakte Bauweise erreicht werden.

In einer bevorzugten Ausführung der Erfindung ist der Progressivverteiler frei von elektronischen Bauteilen ist, welche ein Fördern von Schmierstoff beeinflussen. Hierdurch kann eine einfache und zuverlässige Funktionsweise erreicht werden.

Vorzugsweise weist der Progressivverteiler mehrere Schmierstoffausgänge auf und ist dazu vorgesehen ist, bei gleichmäßigem Zufluss von Schmierstoff zu dem Progressivverteiler vorbestimmte Mengen Schmierstoff in einem vorbestimmten Zeitintervall an die Schmierstoffausgänge zu fördern. Auf diese Weise kann eine effektive Schmierstoffversorgung erreicht werden.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt eine perspektivische Ansicht eines Teils eines Progressivverteilers, wobei ein erfindungsgemäßer Progressivverteilergrundkörper des Progressivverteilers mit seinen Kanten und Bohrungen aber durchsichtig dargestellt ist und Verschlüsse von Ausnehmungen, in welchen Kolbenelemente angeordnet sind, nicht dargestellt sind,
Fig. 2 zeigt einen Teilschnitt durch den Progressivverteiler, und
Fig. 3 bis Fig. 7 zeigen aufeinanderfolgende Phasen eines periodischen Betriebsvorgangs des Progressivverteilers.

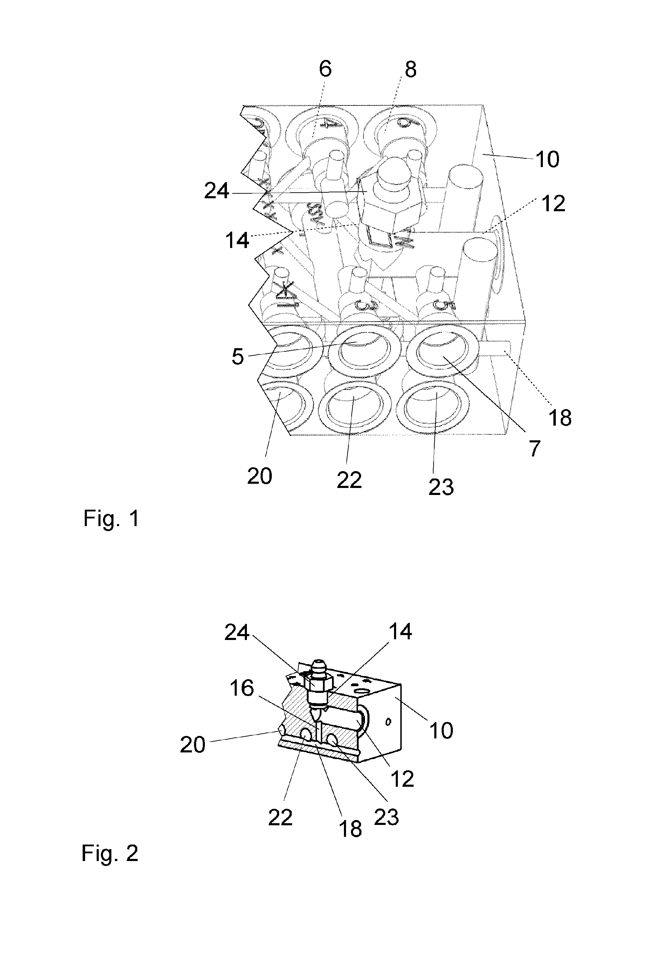

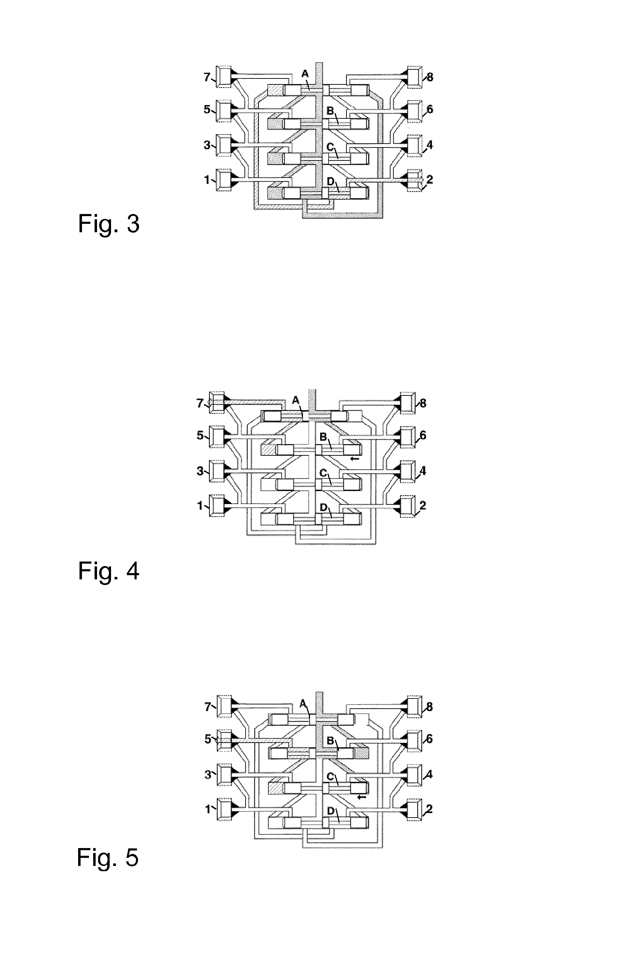

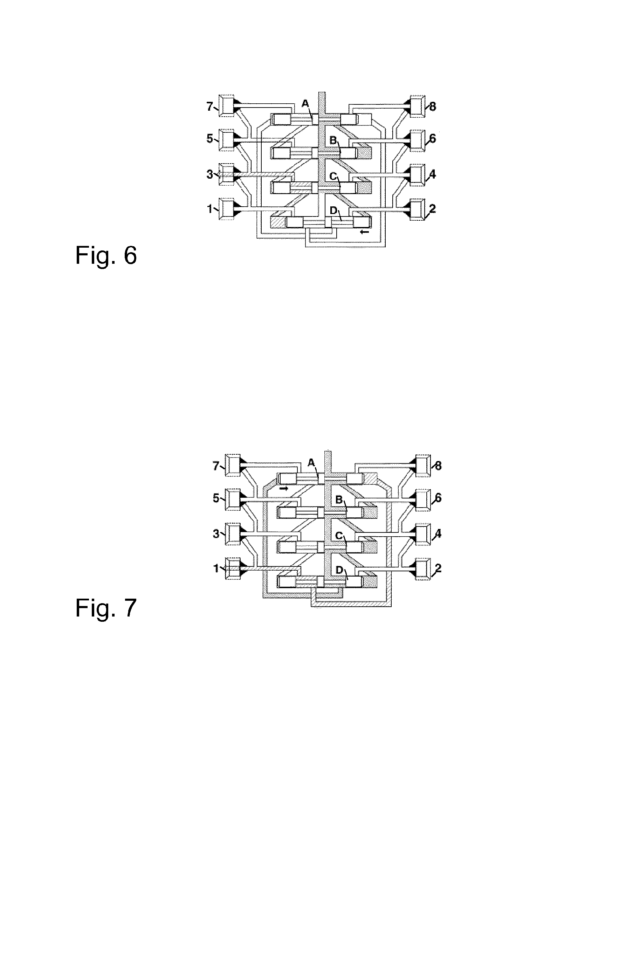

Figur 1 zeigt eine perspektivische Ansicht eines Teils eines Progressivverteilers, wobei ein erfindungsgemäßer Progressivverteilergrundkörper 10 des Progressivverteilers mit seinen Kanten und Bohrungen aber durchsichtig dargestellt ist. Der Progressivverteilergrundkörper 10 weist einen ersten und einen zweiten Schmierstoff einlasskanal 12, 14 auf, welche beide als Bohrungen ausgebildet sind. Der zweite Schmierstoffeinlasskanal 14 mündet in den ersten Schmierstoffeinlasskanal 12. Ferner ist der Progressivverteilergrundkörper 10 einstückig ausgebildet. Eine Längsrichtung einer Bohrung 16 des Progressivverteilergrundkörpers 10 verläuft parallel zu einer Längsrichtung des zweiten Schmierstoffeinlasskanals 14 und verbindet diesen mit einem Kanal 18 des Progressivverteilergrundkörpers 10, welcher in Fluidverbindung mit Ausnehmungen 20, 22, 23 des Progressivverteilergrundkörpers 10 steht, in welchen jeweils ein Kolbenelement A, B, C des Progressivverteilers aufgenommen ist (Figuren 3 bis 7). Abdichtungen, welche die Ausnehmungen an ihren Enden verschließen, sind in Figur 1 nicht dargestellt. Der Progressivverteiler weist auch ein viertes Kolbenelement D auf.

Alternativ ist denkbar, dass der Progressivverteilergrundkörper 10 wenigstens zwei Scheiben aufweist, welche aneinander befestigt sind. Dabei ist eine Abdichtung insbesondere gegenüber dem Bereich außerhalb des Progressivverteilergrundkörpers 10 denkbar. Fern können dabei Kanäle von einer Scheibe in eine andere Scheibe übergehen.

Bei einem ersten Betriebsvorgang ist der Schmierstoffeinlasskanal 12 an eine automatisch funktionierende Pumpe angeschlossen, welche Schmierstoff mit einem konstanten Volumenstrom in den Schmierstoffeinlasskanal 12 pumpt. Alternativ hierzu kann bei einem zweiten Betriebsvorgang mit einer manuell betriebenen Pumpe Schmierstoff durch einen Schmiernippel 24 des Progressivverteilers durch den Schmierstoffeinlasskanal 14 in den Progressivverteilergrundkörpers 10 eingebracht werden. Der Schmiernippel 24 weist ein Rückstellventil auf. Er ist in den Schmierstoffeinlasskanal 14 eingeschraubt. Ferner kann er an einem Ende des Schmierstoffeinlasskanals 14 angeordnet sein. Der Progressivverteiler ist frei von elektronischen Bauteilen, welche ein Fördern von Schmierstoff beeinflussen.

Der Progressivverteiler ist dazu vorgesehen, bei dem ersten Betriebsvorgang vorbestimmte Mengen Schmierstoff in einem vorbestimmten Zeitintervall an die Schmierstoffausgänge 1-8 zu fördern, wobei diejenige Energie, welche zum Fördern des Schmierstoff benötigt wird, ausschließlich von derjenigen Energie gewonnen wird, welche der Schmierstoff bei seinem Eindringen in den Progressivverteilergrundkörper 10 als kinetische Energie hat.

Der Schmierstoff kann Fett oder Öl sein.

Figuren 3 bis 7 zeigen schematisch einen Teil eines Ablaufs eines periodischen Betriebsvorgangs des Progressivverteilers. Dabei gelangt Schmierstoff durch die Bohrung 16 und fließt bis zu einem Ende von Kolbenelement A und bewegt dieses relativ zum Progressivverteilergrundkörper 10 und drückt dabei Schmierstoff durch den Schmierstoffausgang 2. Dabei öffnet Kolbenelement A einen Verbindungskanal zu einem Ende von Kolbenelement B. Der durch die Bohrung 16 fließende Schmierstoff bewegt Kolbenelement B relativ zum Progressivverteilergrundkörper 10 und fördert dabei Schmierstoff durch den Schmierstoffausgang 7. Dabei öffnet Kolbenelement B einen Verbindungskanal zu einem Ende von Kolbenelement C. Der durch die Bohrung 16 fließende Schmierstoff bewegt Kolbenelement C relativ zum Progressivverteilergrundkörper 10 und fördert dabei Schmierstoff durch den Schmierstoffausgang 5. Dabei öffnet Kolbenelement C einen Verbindungskanal zu einem Ende von Kolbenelement D. Der durch die Bohrung 16 fließende Schmierstoff bewegt Kolbenelement D relativ zum Progressivverteilergrundkörper 10 und fördert dabei Schmierstoff durch den Schmierstoffausgang 3. Dabei öffnet Kolbenelement D einen Verbindungskanal zu einem Ende von Kolbenelement A. Der durch die Bohrung 16 fließende Schmierstoff bewegt Kolbenelement A relativ zum Progressivverteilergrundkörper 10 und fördert dabei Schmierstoff durch den Schmierstoffausgang 1. Damit ist eine halbe Periode des Betriebsvorgangs beendet. Ein Ablauf der zweiten Hälfte der Periode erfolgt analog.

### Bezugszeichenliste

| | |
|---|---|
| A | Kolbenelement |
| B | Kolbenelement |
| C | Kolbenelement |
| D | Kolbenelement |
| 1 | Schmierstoffausgang |
| 2 | Schmierstoffausgang |
| 3 | Schmierstoffausgang |
| 4 | Schmierstoffausgang |
| 5 | Schmierstoffausgang |
| 6 | Schmierstoffausgang |
| 7 | Schmierstoffausgang |
| 8 | Schmierstoffausgang |
| 10 | Progressivverteilergrundkörper |
| 12 | Schmierstoffeinlasskanal |
| 14 | Schmierstoffeinlasskanal |
| 16 | Bohrung |
| 18 | Kanal |
| 20 | Ausnehmung |
| 22 | Ausnehmung |
| 23 | Ausnehmung |
| 24 | Schmiernippel |

## Patentansprüche

1. Progressivverteilergrundkörper mit einem ersten Schmierstoffeinlasskanal (12) und wenigstens einem zweiten Schmierstoffeinlasskanal (14),
**dadurch gekennzeichnet, dass**
der Progressivverteilergrundkörper einstückig ausgebildet ist, und dass eine Längsrichtung des zweiten Schmierstoffeinlasskanals (14) parallel zu einer Längsrichtung einer Bohrung (16) des Progressivverteilergrundkörpers ist, welche wenigstens einen der Schmierstoffeinlasskanäle (12, 14) mit einem Kanal (18) des Progressivverteilergrundkörpers verbindet, der zu wenigstens zwei Ausnehmungen (20, 22) des Progressivverteilergrundkörpers, welche für die Aufnahme von Kolbenelementen vorgesehen sind, führt.

2. Progressivverteilergrundkörper nach Anspruch 1, wobei der erste Schmierstoffeinlasskanal (12) mit dem zweiten Schmierstoffeinlasskanal (14) zusammentrifft.

3. Progressivverteiler mit einem Progressivverteilergrundkörper nach einem der Ansprüche 1 oder 2.

4. Progressivverteiler nach Anspruch 3, wobei der Progressivverteiler wenigstens einen Schmiernippel (24) aufweist, durch welchen in wenigstens einem Betriebsmodus des Progressivverteilers Schmierstoff in den zweiten Schmierstoffeinlasskanal (14) einbringbar ist.

5. Progressivverteiler nach Anspruch 4, wobei der Schmiernippel (24) an einem Ende des zweiten Schmierstoffeinlasskanals (14) angeordnet ist.

6. Progressivverteiler nach einem der Ansprüche 3 bis 5, wobei der Progressivverteiler frei von elektronischen Bauteilen ist, welche ein Fördern von Schmierstoff beeinflussen.

7. Progressivverteiler nach einem der Ansprüche 3 bis 6, wobei der Progressivverteiler mehrere Schmierstoffausgänge (1-8) aufweist und dazu vorgesehen ist, bei gleichmäßigem Zufluss von Schmierstoff zu dem Progressivverteiler vorbestimmte Mengen Schmierstoff in einem vorbestimmten Zeitintervall an die Schmierstoffausgänge (1-8) zu fördern.
